**Europäisches Patentamt**

**European Patent Office**

**Office européen des brevets**

(19)

(11) Veröffentlichungsnummer: **0 036 197**
**A1**

(12) **EUROPÄISCHE PATENTANMELDUNG**

(21) Anmeldenummer: **81101883.7**

(22) Anmeldetag: **13.03.81**

(51) Int. Cl.³: **A 01 D 69/00**
**F 15 B 1/06**

(30) Priorität: **14.03.80 US 130389**

(43) Veröffentlichungstag der Anmeldung:
**23.09.81 Patentblatt 81/38**

(84) Benannte Vertragsstaaten:
**AT BE CH DE FR GB IT LI NL SE**

(71) Anmelder: **DEERE & COMPANY**

**Moline Illinois 61265(US)**

(72) Erfinder: **Bennink, Clarence Clyde**
**R.R. 4**
**Ottumwa Iowa 52501(US)**

(74) Vertreter: **Fricke, Joachim, Dr. et al,**
**Dr. R. Döring, Dr. J. Fricke, Patentanwälte**
**Josephspitalstrasse 7**
**D-8000 München 2(DE)**

(54) **Hydrauliköl-Reservoir für Fahrzeuge.**

(57) Ein Hydrauliköl-Reservoir (15) ist gebildet durch einen hohlen, langgestreckten tragenden Abschnitt eines Gestells oder Rahmens eines beweglichen Gerätes oder einer Maschine, insb. einer Erntemaschine.

Der Behälter (15) des Reservoirs ist gegenüber seinem Querschnitt in einer Richtung langgestreckt und kann bei Betrieb des Gerätes oder der Maschine unterschiedliche Neigungen gegenüber einer Horizontalebene (91) unterworfen werden. In dem Behälter, der zur Versorgung von hydraulischen Systemen oder Anordnungen des beweglichen Gerätes oder der Maschine dient, ist eine Hydraulikölfüllung (87) vorgesehen, die in nicht dargestellter Weise mit dem hydraulischen System verbunden ist. Oberhalb der Ölfüllung (87) ist ein Luft-Kopfraum (89) vorgesehen. Da infolge des Betriebes der hydraulischen Systeme sich der Füllstand des Öls im Behälter (15) ändert kann im Behälter eine Druckänderung auftreten. Zum Ausgleich dieses Druckes ist eine Belüftungsvorrichtung (41) vorgesehen. Diese weist in der Decke des Behälters zwei im Abstand liegende Belüftungsöffnungen (77), (79) auf, die über entsprechende Leitungen (73) und (75) mit einem Belüftungsstück (41) verbunden sind, das über einer porösen Körper eine gedrosselte Luftströmung zwischen dem Kopfraum (89) und der Umgebungsatmosphäre in jeder Neigungsstellung des Behälters (15) gewährleistet.

FIG. 3

COMPLETE DOCUMENT

Croydon Printing Company Ltd.

Hydrauliköl-Reservoir für Fahrzeuge

Die Erfindung betrifft ein Hydrauliköl-Reservoir für die Versorgung von Hydraulikanlagen, insb. in bewegten Systemen, bestehend aus wenigstens einem Behälter, der an die Hydraulikanlage anschließbar ist, und einer Behälterbelüftungseinrichtung.

Es ist von nachgeschleppten Heuwerbungsmaschinen bekannt, eine über die nachgeschleppte Maschine ragende Zugstange schwenkbar anzuordnen und diese Zugstange als hohlen Träger auszubilden, der zugleich als Hydrauliköl-Reservoir dient, aus dem die der nachgeschleppten Maschine zugeordneten Hydraulikanordnungen mit Hydrauliköl versorgt werden. Die Zugstange ist in einer senkrechten Ebene nach oben konvex gebogen, weist an ihrem höchsten Punkt eine Füllöffnung und an den beiden tieferliegenden Enden den Entnahmestutzen bzw. den Rücklaufstutzen auf (vergl. US-PS 38 32 837.

Es ist weiterhin bei selbstfahrenden Erntemaschinen bekannt, wenigstens einen Rahmenabschnitt, z.B. den über der Hinterradachse quer verlaufenden Rahmenabschnitt des

- 2 -

Fahrgestellrahmens als Hydrauliköl-Reservoir auszubilden um die von dem Fahrgestellrahmen unterstützten Hydraulikanlagen zu versorgen (vergl. US-PS 34 69 381). Diese Anordnung hat den Vorteil, daß ein gesondertes Hydrauliköl-Reservoir entbehrlich wird, so daß sich eine vereinfachte und in der Herstellung billigere Anordnung ergibt. Auf der anderen Seite ist der langgestreckte Rahmenteil des Fahrgestellrahmens aufgrund seines relativ geringen Füllquerschnitts im Vergleich zu seiner großen Länge besonders geeignet, um Wärme aus dem Hydraulikversorgungskreis an die Umgebung abzuführen. Bei Hydrauliköl-Reservoiren der in Frage stehenden Art ist in dem Behälter oberhalb des Ölspiegels ein Luftraum vorhanden, welcher dem in Abhängigkeit vom Betriebszustand wechselnden Füllstand innerhalb des Behälters Rechnung trägt. Dieser Kopfraum muß zur Atmosphäre hin belüftet werden, damit sich in dem Behälter nicht ein unzulässig hoher Druck entwickeln kann. Eine bekannte Maßnahme zum Entlüften eines solchen Hydrauliköl-Reservoirs besteht darin, eine außerhalb des Behälters liegende Leitung vorzusehen, die mit einem Ende an eine Öffnung an der Oberseite des Behälters angeschlossen ist. Das andere Ende ist durch einen porösen Stöpsel, z.B. aus Sintermetall, verschlossen. Dieser Stöpsel gestattet einen freien Luftaustausch zwischen der Atmosphäre und dem Kopfraum des Behälters und verhindert gleichzeitig, daß Verunreinigungen in den Behälter eintreten können.

Während solche Belüftungssysteme unter normalen Verhältnissen zufriedenstellend arbeiten zeigen sich jedoch Schwierigkeiten in bewegten Systemen wie Fahrzeugen, die in sehr unebenem Gelände eingesetzt werden müssen. Dies gilt für vielerlei Arten von selbstfahrenden Geräten und Arbeitsmaschinen, insb. jedoch für Heuwerbungsmaschinen wie sie in der oben genannten US-PS 34 69 381 gezeigt und beschrieben sind. Bei Betrieb solcher Maschinen in unebenem Gelände zeigt es sich, daß bei Überschreiten bestimmter Neigungen des Fahrgestellrahmens gegenüber einer horizontalen Ebene die Entlüftungseinrichtung unter den Spiegel des in dem Behälter befindlichen Hydrauliköls gelangt. Dadurch verliert die Einrichtung ihre Belüftungsfunktion. Außerdem kann Hydrauliköl aus dem porösen Stopfen aussickern, wenn eine der Hydraulikanordnungen der Heuwerbungsmaschine, z.B. zum Anheben und Absenken eines Schneidkopfes, betätigt werden. Das Auslecken von Hydrauliköl wird besonders dadurch begünstigt, daß bei Auftreten solcher Funktionen der Hydraulikanordnungen Öl aus den einfach wirkenden Hydraulikzylindern in das Reservoir abfließen muß, wodurch sich der Füllstand und damit der Druck im Inneren des Behälters erhöhen. Dieser erhöhte Druck treibt das Öl durch den porösen Stopfen, wodurch zwar der Druckanstieg im Behälter begrenzt wird, jedoch Hydrauliköl verlorengeht.

Es ist Aufgabe der vorliegenden Erfindung hier Abhilfe zu schaffen und ein Hydrauliköl-Reservoir der eingangs genannten Art so weiterzubilden, daß bei bewegten Systemen, bei denen das Reservoir eingesetzt wird, auch bei Betrieb in sehr unebenem Gelände ein unerwünscht hoher Druck in dem Behälter nicht auftreten kann und das Austreten von Hydrauliköl aus der Belüftungseinrichtung zuverlässig vermieden wird, und zwar unabhängig von der Neigungslage des Behälters gegenüber einer gedachten horizontalen Ebene. Damit soll zugleich dafür gesorgt werden, daß der Behälter des Hydrauliköl-Reservoirs bis zu einem höheren Füllstand im Vergleich zu bisherigen Behältern dieser Art gefüllt werden kann. Zugleich sollen dabei die Perioden zwischen den Wartungen und dem Nachfüllen des Öls in den Behälter gegenüber bekannten Anordnungen wesentlich verlängert werden.

Diese Aufgabe wird gemäß der Erfindung dadurch gelöst, daß in einem oberen Wandbereich des Behälters wenigstens zwei im gegenseitigen Abstand liegende Öffnungen vorgesehen sind, die jeweils über Leitungen oder dgl. mit einem gemeinsamen Belüftungsglied verbunden sind. Bevorzugt sind die beiden Öffnungen in Längsrichtung des langgestreckten Behälters im gegenseitigen Abstand angeordnet. Hierdurch wird gewährleistet, daß bei jeder auftretenden Neigung des Behälters gegenüber einer gedachten horizontalen Ebene zwar eine der Öffnungen sich absenkt und damit der Gefahr unterliegt, daß diese Öffnung unter die Füllstandshöhe des Behälters absinkt und damit vom Hydrauliköl überflutet wird, gleichzeitig aber die andere Öffnung
im entgegengesetzten Sinne angehoben wird und damit weit
aus dem Bereich der Füllstandshöhe des Behälters gelangt.
Es wird damit erreicht, daß stets wenigstens eine der
beiden Öffnungen in freier Verbindung mit dem Kopfraum
oberhalb des Flüssigkeitsspiegels im Behälter liegt und daher in allen Lagen des Behälters zu einer wirksamen Belüftung beiträgt. Die Anordnung kann dabei so getroffen
werden, daß auch bei nur kleinem Kopfraum und hohem Füllstand die Belüftung des Behälters in allen auftretenden
Lagen gewährleistet bleibt. Damit wird wirksam das Austreten von Hydrauliköl aus der Belüftungseinrichtung ausgeschlossen. Da kein Hydrauliköl aus der Belüftungseinrichtung mehr austreten kann, ist ein Nachfüllen von
Hydrauliköl in den Behälter nicht mehr oder nur in wesentlich größeren Zeitabständen erforderlich. Dies vereinfacht
und erleichtert die Wartung. Da Öl aus der Belüftungseinrichtung nicht mehr austreten kann, unterbleibt auch die
sonst damit verbundene Verschmutzung an den durch das Öl
verschmierten Maschinenteilen, wobei sich Staub oder andere
Schmutzteile bevorzugt an solchen ölverschmierten Teilen
festsetzen.

Die beiden Öffnungen sind vorteilhafterweise in der Deckenwand eines zugleich als Behälter dienenden langgestreckten
hohlen Rahmenteils eines zur Aufstandsfläche etwa parallelen
Fahrgestellrahmens vorgesehen. Damit eignet sich das Hydrauliköl-Reservoir nach der Erfindung ganz besonders für den Einsatz bei selbstfahrenden Erntemaschinen wie Heuwerbungsmaschinen, da diese häufig in sehr unebenem Gelände oder an Hängen eingesetzt werden müssen, was bisher zu erheblichen Problemen bei der Belüftung der Hydraulikbehälter geführt hat.

Das gemeinsame Belüftungsglied weist zweckmäßigerweise einen die Luftströmung zu und von den beiden Öffnungen drosselnden Teil, vorzugsweise einen hierfür bekannten Metallpfropfen aus Sintermetall auf.

Es hat sich auch als vorteilhaft erwiesen, wenn das gemeinsame Belüftungsglied im Abstand von beiden Öffnungen und im Abstand oberhalb des oberen Wandbereiches des Behälters angeordnet ist. Hierbei können die das Belüftungsglied mit den Öffnungen in der Behälterdecke verbindenden Leitungen zum größtenteil ebenfalls im Abstand oberhalb der Behälterdecke angeordnet sein. Dies verbessert weiterhin die Schutzfunktion gegen das Austreten von Hydrauliköl.

Die Erfiundung wird nachfolgend anhand schematischer Zeichnungen an einem Ausführungsbeispiel näher erläutert.

Es zeigen:

0036197

- 7 -

Figur 1 in perspektivischer Darstellung einen Fahrgestellrahmen eines beweglichen Arbeitsgerätes mit
einem Hydrauliköl-Reservoir gemäß der Erfindung.

Figur 2 eine Teilansicht von vorne, teilweise in Querrichtung des Fahrgestells geschnitten, des
Hydrauliköl-Reservoirs gemäß Fig. 1

Figur 3 eine schematische Darstellung des neuen Reservoirs
in einer extremen Schieflage und

Figur 4 in schematischer Darstellung eine Veranschaulichung der Situation der Schieflage nach Fig. 3 bei
Anwendung des bisher üblichen Entlüftungssystems.

Die nachfolgend verwendeten Richtungs- und Orientierungshinweise sollen lediglich das Verständnis erleichtern,
ohne die Erfindung zu begrenzen. Sie beziehen sich auf
eine Situation, in der das Fahrgestell auf ebenem, horizontalem Grund in normaler Arbeitsposition steht. Sie
beziehen sich weiterhin auf die allgemeine Vorwärtsfahrtrichtung der Arbeitsmaschine. Die Bezeichnungen links und
rechts beziehen sich somit auf eine Person, die hinter
der Maschine steht und in Fahrtrichtung blickt.

Das Hydrauliköl-Reservoir nach der Erfindung kann in
weitem Umfange bei verschiedenen beweglichen Systemen und

- 8 -

Fahrzeugen mit hydraulisch kontrollierten Komponenten eingesetzt werden. Besonders vorteilhaft ist sein Einsatz bei beweglichen landwirtschaftlichen Maschinen und Geräten. Nachfolgend wird die Erfindung anhand eines bevorzugten Einsatzgebietes, nämlich anhand einer selbstfahrenden Heuwerbungsmaschine, beschrieben.

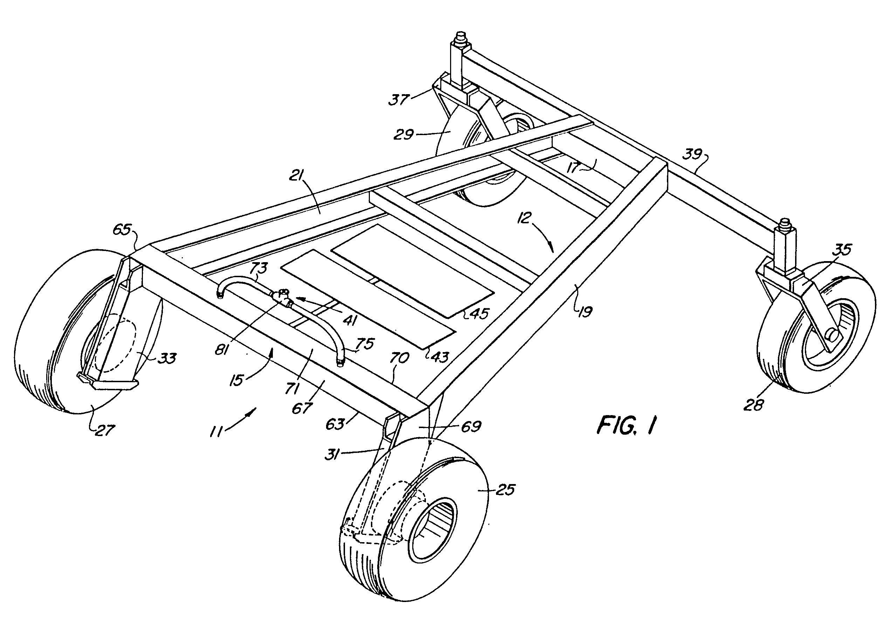

In Fig. 1 ist nur der Fahrzeugrahmen 11 einer Erntemaschine gezeigt. Der Fahrzeugrahmen 11 einer solchen Erntemaschine trägt üblicherweise eine vordere, in Querrichtung langgestreckte und der Höhe nach einstellbare Ernteplattform. Diese dient zum Schneiden von stehendem Erntegut und sorgt dafür, daß dieses in Querrichtung zu einem Schwad zusammengezogen und abgelegt wird, wenn die Erntemaschine über das Feld fährt. Eine Reihe von Komponenten oder Funktionen der Erntemaschine, z.B. die senkrechte Einstellung der Plattform oder der Vorderradantrieb werden hydraulisch bewirkt oder gesteuert (vergl. hierzu beispielsweise die US-PS 41 59 749).

Gemäß Fig. 1 weist der Fahrgestellrahmen 11 Hauptrahmenteile 12 auf, zu denen ein vorderer und quer zur Fahrtrichtung verlaufender Rahmenabschnitt 15 gehört. Dieser Rahmenabschnitt 15 ist in üblicher Weise aus einem Stahlrohr von rechteckförmigem Querschnitt gebildet. Der Hauptrahmen 12 weist am rückwärtigen Ende einen relativ kurzen Querrahmenabschnitt 17 sowie Längsholme 19 und 21 auf, welche die beiden Querrahmenabschnitte 15 und 17 miteinander verbinden. Die Seitenholme 19 und 21 weisen einen kanalförmigen Querschnitt auf, der nach innen zu offen ist. Der Hauptrahmen 12 und die übrigen Teile des Fahrgestellrahmens 11 können durch Schweißen oder auf andere Weise miteinander verbunden sein.

Der Fahrgestellrahmen ist mit Lauf- oder Bodenrädern ausgerüstet. Er weist zwei hydraulisch angetriebene Vorderräder 25 und 27 und zwei nicht angetriebene Hinterräder 28 und 29 auf. Die Laufräder sind in üblicher Weise mit dem Hauptrahmen 12 über Laufradtrageinrichtungen 31, 33 für die Vorderräder bzw. 35,37 für die Hinterräder unterstützt. Die Stützeinrichtungen 35 und 37 für die Hinterräder sind über ein Querrahmenglied 39 miteinander verbunden, der an dem hinteren Rahmenabschnitt 17 festgelegt ist. Der vordere Rahmenabschnitt 15 ist flüssigkeitsdicht ausgebildet und ist als ein Hydrauliköl aufnehmender Behälter ausgebildet. Er stellt das Hydrauliköl-Reservoir für eine Hydraulikanordnung dar, die auf dem Fahrgestellrahmen 11 angeordnet ist. Die hydraulisch betätigbaren oder steuerbaren Anordnungen der Erntemaschine sind in Fig. 1 nur schematisch bei 45 angedeutet. Zur Vereinfachung sind auch die Leitungsverbindungen, insb. auch die Verbindungen zu dem Hydrauliköl-Reservoir 15 weggelassen. Mit dem Schaltblock 43 sind die weiteren Komponenten schematisch angedeutet, die zusätzlich zu den hydraulisch betätigten Anordnungen 45 zu dem gesamten Hydrauliksystem gehören. Von diesem Hydrauliksystem sind lediglich das Reservoir 15 und die Belüftungseinrichtung 41 gesondert dargestellt. Es kann davon ausgegangen werden, daß die hydraulisch betätigbaren Komponenten 45 und die Komponenten 43 des Hydrauliksystems von üblicher Ausbildung und Anordnung sind, so daß eine nähere Beschreibung zur Vereinfachung entfallen kann.

Der Rahmenabschnitt 15, der zugleich den Behälter des Hydrauliköl-Reservoirs bildet, besteht aus einem Stahlrohrabschnitt von rechteckförmigem Querschnitt. Er weist eine Bodenwand 63, Seitenwände 65,67,69 und 70 sowie eine Wanddecke 71 auf. Die Belüftungseinrichtung 41 weist zwei Leitungs- oder flexible Schlauchabschnitte 73 und 75 auf. Ein Ende jedes Leitungsabschnittes 73 bzw. 75 ist jeweils an eine von zwei in der Deckenwand 71 im gegenseitigen Abstand angeordnete Öffnungen 77,79 angeschlossen. Es kann sich hier z.B. um in die Decke 71 eingeschweißte Schlauchanschlußstutzen handeln, an die die Enden der Schlauchabschnitte 73,75 angeschlossen sind. Das andere Ende der beiden Leitungs- oder Schlauchabschnitte 73,75 ist an einem gemeinsamen T-Kupplungsstück 81 angeschlossen. In die dritte Anschlußöffnung des Kupplungsstückes 81 ist mittels kappenförmiger Halterung 85 ein Belüftungsstöpsel 83 aus Sintermetall eingesetzt. Der Stöpsel kann in die Kappe mittels Preßsitz eingesetzt sein. Der Belüftungsstöpsel 83 läßt eine gedrosselte Strömung zwischen der Außenatmosphäre und den beiden Leitungsabschnitten 73 und 75 zu und verhindert gleichzeitig das Eindringen von Schmutz oder anderen Verunreinigungen von außen.

Der langgestreckte rohrförmige Behälter 15 weist ein vorgegebenes Gesamtvolumen auf. Bei Betrieb wird dieses nur teilweise von einem Hydraulikölvolumen 87 ausgefüllt, das in dem Behälter 15 noch ein drittes, mit Luft gefülltes Volumen 89, also einen Kopfraum, beläßt. Die Größe dieser Volumina sind durch Kapazität,Ausgestaltung und Bedarf des Hydrauliksystems bestimmt. Ein Konstruktionskriterium besteht z.B. darin, daß bei Betrieb der Erntemaschine am Hang gewährleistet bleiben muß, daß die Anschlußöffnungen des Behälters für das Hydrauliksystem bei allen zu erwartenden Neigungslagen der Erntemaschinen gegenüber einer gedachten horizontalen Ebene in das Ölfüllvolumen 87 des Behälters 15 eingetaucht bleiben müssen, wenn die Hydrauliksysteme zuverlässig und kontinuierlich mit Hydrauliköl versorgt werden sollen. Andernfalls tritt in dem Hydrauliksystem Kavitation auf, welches die Funktion der hydraulisch betätigten Einrichtungen beeinträchtigt.

Der gegenseitige Abstand und die gegenseitige Lage der Öffnungen 77 und 79, insb. in Bezug auf die Längserstreckung des Behälters 15 sind so gewählt, daß wenigstens eine der Belüftungsöffnungen 77, 79 in jeder zu erwartenden Lage und Neigung des Fahrgestellrahmens 11 in freier Verbindung mit dem Kopfraum 89 des Behälters 15 verbleibt.

- 12 -

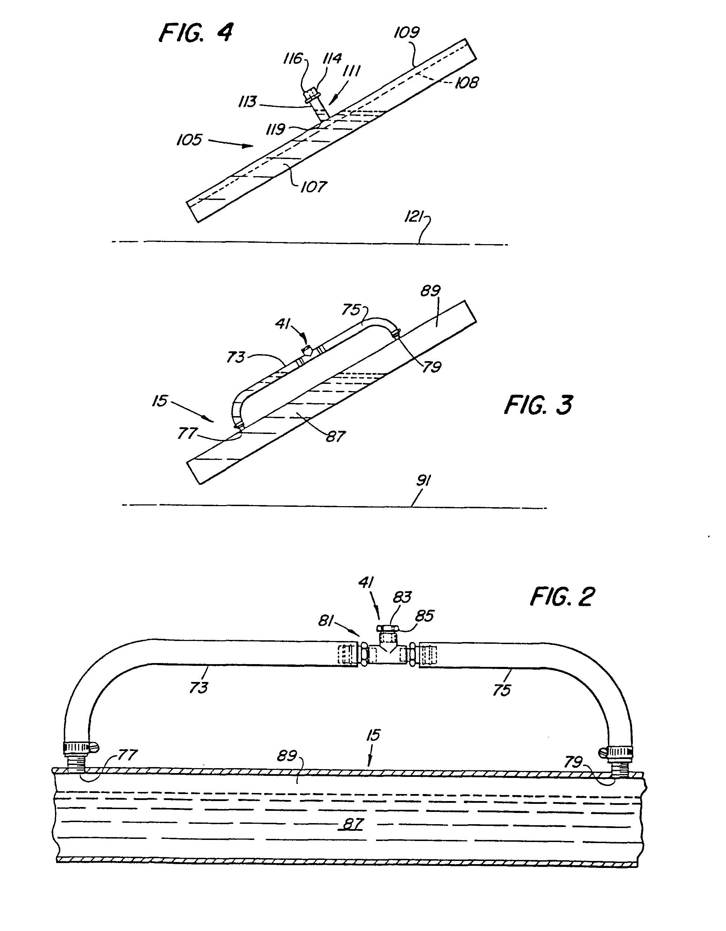

In Fig. 3 ist eine Betriebslage des Fahrgestellrahmens als Beispiel wiedergegeben. Hierbei ist angenommen, daß die Erntemaschine am Hang arbeitet, und zwar mit starker Querneigung. Es ist eine Hangneigung von $30^\circ$ gegenüber der gedachten horizontalen Ebene 91 zugrundegelegt. Der Behälter 15 ist in Bezug auf seine Längsrichtung dem gleichen Neigungswinkel unterworfen. Das Ölvolumen 87 in dem Behälter 15 verlagert sich zum tieferen Ende des Behälters 15 hin, während der Kopfraum 89 im Bereich des anderen oder höher liegenden Endes des Behälters 15 liegt. Man erkennt, daß die Belüftungsöffnung 77 und Teile des zugehörigen Leitungsabschnittes 73 von dem Ölvolumen 87 überflutet sind. Dagegen verbleiben die Belüftungsöffnung 79 und die zugehörige Leitung 75 in freier Verbindung mit dem Kopfraum 89. Wenn eine der hydraulisch betätigbaren Komponenten, z.B. ein einfach wirkender Hydraulikzylinder oder andere hydraulisch betätigbare Funktionen in Betrieb genommen werden, wobei aus diesen Komponenten Öl zum Behälter 15 zurückgeleitet wird, nimmt das Volumen des Kopfraumes 89 entsprechend ab. Durch die Drosselwirkung des Belüftungsstöpsels 83 nimmt dabei der Druck im Kopfraum leicht zu. Dieser Druck wird jedoch über den Belüftungsstöpsel 83 allmählich abgebaut, ohne daß Öl aus dem Leitungsabschnitt 73 über den Stöpsel 83 nach außen dringen kann, wie dies bei der üblichen Anordnung 105 nach Fig. 4 auftreten kann. In Fig. 4 ist mit der gestrichelten Linie 108 die Füllstandshöhe des Öls bei horizontaler Lage des Behälters gezeigt. In der dargestellten Schräglage befindet sich das Ölvolumen 107 an einem Ende des Behälters, während der Kopfraum 109 am obenliegenden Ende des Behälters vorliegt. Die Belüftungseinrichtung 111 weist einen zentralen Stutzen 113 auf, an dessen Ende mittels Kappe 114 ein poröser Stöpsel 116 aus Metall angeordnet ist. Der Stutzen 13 ist in einer Deckenöffnung 119 des Behälters 105 angebracht. Bei der in Fig. 4 dargestellten Neigung des Behälters gegenüber einer gedachten horizontalen Ebene 121, z.B. bei Betrieb der Erntemaschine am Hang, ergibt sich die in Fig. 4 dargestellte Verteilung von Ölvolumen 107 und Luft im Kopfraum 109. Bei Betrieb der Erntemaschine kann in dieser Neigungsstellung Öl aus der Belüftungseinrichtung 11 nach außen dringen wenn eine hydraulische Funktion in Betrieb genommen wird, bei der Öl in den Behälter 105 zurückfließt. Dadurch wird der Kopfraum 109 unter Druck versetzt. Der erhöhte Druck treibt das im Stutzen 113 stehende Öl durch den porösen Körper 116 nach außen. Die Belüftungseinrichtung 111 verliert somit in der dargestellten Arbeitsposition der Erntemaschine ihre Funktion.

Bei der Anordnung gemäß der Erfindung ist die Belüftungseinrichtung so ausgebildet, daß stets wenigstens eine der Öffnungen 77 und 79 eine freie Verbindung zum Kopfraum 89 und zum porösen Stöpsel 83 aufweist, auch wenn der Fahrgestellrahmen 11 der Erntemaschine starken Neigungen und Neigungswechseln unterworfen ist. Auf diese Weise ist gewährleistet, daß stets eine Druckentlastung aus dem Kopfraum erfolgen kann, wenn eine oder mehrere der hydraulischen Funktionen der Erntemaschinen in Betrieb genommen werden. Öl kann aus dem Stöpsel 83 nicht nach außen dringen, selbst dann nicht, wenn von dem Gesamtvolumen des Behälters 15 das Ölvolumen 87 einen größeren Anteil als üblich einnimmt. Damit kann der in Querrichtung langgestreckte Rahmenabschnitt zuverlässig beide Funktionen, nämlich die mechanische Funktion im Zusammenhang mit dem Fahrgestellrahmen ebenso wie die Behälterfunktion im Rahmen des hydraulischen Systems übernehmen. Bei der Anordnung mit zwei im Abstand angeordneten Belüftungsöffnungen in dem Behälter 15 ist es auch ohne weiteres Möglich, durch den Abstand des T-Verbindungsstückes 81 von der Decke 71 des Behälters 15 und durch die entsprechende Führung der Hauptlängen der Verbindungsleitungen 73 und 75 ebenfalls im Abstand von der Decke dafür Sorge zu tragen, daß, bezogen auf den maximalen Füllstand des Behälters und die maximal zu erwartende Neigung des Fahrgestellrahmens das Ansteigen des Öles in dem tiefer liegenden Leitungsabschnitt, z.B. in dem Leitungsabschnitt 73 in Fig. 3 unter keinen Umständen bis zur Überflutung des porösen Stopfens 83 reicht.

Wenn auch vorstehend die bevorzugte Anwendung der Erfindung im Zusammenhang mit einer Erntemaschine beschrieben ist, wird nochmals darauf hingewiesen, daß die Erfindung auch bei anderen beweglichen landwirtschaftlichen Geräten oder

- 15 -

Maschinen oder in anderen Bereichen bei beweglichen Arbeitsmaschinen oder dgl. eingesetzt werden kann.

0036197

- 1 -

P a t e n t a n s p r ü c h e

1. Hydrauliköl-Reservoir für die Versorgung von Hydraulikanordnungen, insb. in bewegten Systemen, bestehend
aus wenigstens einem Behälter, der an die Hydraulikanlage anschließbar ist, und einer Behälterbelüftungseinrichtung, dadurch g e k e n n z e i c h -
n e t, daß in einem oberen Wandbereich des Behälters (15) wenigstens zwei im gegenseitigen Abstand
liegende Öffnungen (77,79) vorgesehen sind, die jeweils über Leitungen(73,75) oder dgl. mit einem gemeinsamen Belüftungsglied (41) verbunden sind.

2. Hydrauliköl-Reservoir nach Anspruch 1, dadurch
g e k e n n z e i c h n e t, daß die beiden Öffnungen (77,79) in Längsrichtung des langgestreckten
Behälters (15) im gegenseitigen Abstand angeordnet
sind.

3. Hydrauliköl-Reservoir nach Anspruch 2, dadurch
g e k e n n z e i c h n e t, daß die beiden Öffnungen in der Deckenwand (71) eines zugleich als Behälter dienenden langgestreckten hohlen Rahmenteils (15) eines zur Aufstandsfläche etwa parallelen
Fahrgestellrahmens (12) vorgesehen ist, der zur Aufnahme von Komponenten der Hydraulikanordnung dient.

4. Hydrauliköl-Reservoir nach einem oder mehreren der Ansprüche 1 bis 3, dadurch g e k e n n z e i c h - n e t, daß das gemeinsame Belüftungsglied (41) einen die Luftströmung zu und von den beiden Öffnungen (77,79) drosselnden Teil (83), vorzugsweise aus porösem Metall, aufweist.

5. Hydrauliköl-Reservoir nach einem oder mehreren der Ansprüche 1 bis 4, dadurch g e k e n n z e i c h - n e t, daß das gemeinsame Belüftungsglied (41) im Abstand von beiden Öffnungen (77,79) und im Abstand oberhalb des oberen Wandbereiches (71) des Behälters (15) angeordnet ist.

FIG. I

FIG. 4

FIG. 3

FIG. 2

0036197

Europäisches Patentamt

**EUROPÄISCHER RECHERCHENBERICHT**

Nummer der Anmeldung

EP 81 10 1883

| Kategorie | Kennzeichnung des Dokuments mit Angabe, soweit erforderlich, der maßgeblichen Teile | betrifft Anspruch |
|---|---|---|
| **EINSCHLÄGIGE DOKUMENTE** | | |
| D | US - A - 3 832 837 (BURKHART)<br><br>* Spalte 3, Zeilen 27-32; Spalte 4, Zeilen 12-30; Anspruch 5 *<br><br>-- | 1 |
| A | US - A - 3 665 685 (ALLARD)<br><br>* Spalte 2, Zeilen 17-19 *<br><br>-- | 1 |
| A | FR - A - 2 210 089 (FFSA)<br><br>* Seite 2, Zeilen 29-31 *<br><br>-- | 1 |
| A | US - A - 2 931 155 (ANDERSON)<br><br>* Spalte 2, Zeilen 12-14 *<br><br>-- | 1 |
| A | DE - C - 1 206 676 (INTERNATIONAL HARVESTOR)<br><br>* Spalte 1, Zeile 49 - Spalte 2, Zeile 25 *<br><br>-- | 1 |
| A | US - A - 2 818 125 (VOGELAAR)<br><br>* Spalte 2, Zeilen 59-64 *<br><br>---- | 1 |

**KLASSIFIKATION DER ANMELDUNG (Int Cl.³)**

A 01 D 69/00
F 15 B  1/06

**RECHERCHIERTE SACHGEBIETE (Int. Cl.³)**

A 01 D
B 62 D
B 60 G
F 15 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 22-06-1981 | DE LAMEILLEURE |

EPA form 1503.1  06.78